(19) Europäisches Patentamt
European Patent Office
Office européen des brevets

(11) Veröffentlichungsnummer: **0 361 230 B1**

(12) # EUROPÄISCHE PATENTSCHRIFT

(45) Veröffentlichungstag der Patentschrift: **12.01.94**

(51) Int. Cl.⁵: **C08L 77/00**, C08L 69/00, C08L 35/00

(21) Anmeldenummer: **89117098.7**

(22) Anmeldetag: **15.09.89**

Die Akte enthält technische Angaben, die nach dem Eingang der Anmeldung eingereicht wurden und die nicht in dieser Patentschrift enthalten sind.

(54) **Mischungen aus Polyamiden, aromatischen Polycarbonaten und Maleinimid-Copolymerisaten und deren Verwendung als thermoplastische Formmassen.**

(30) Priorität: **28.09.88 DE 3832849**

(43) Veröffentlichungstag der Anmeldung:
**04.04.90 Patentblatt 90/14**

(45) Bekanntmachung des Hinweises auf die Patenterteilung:
**12.01.94 Patentblatt 94/02**

(84) Benannte Vertragsstaaten:
**DE FR GB IT**

(56) Entgegenhaltungen:
**EP-A- 0 232 879**
**EP-A- 0 235 384**
**EP-A- 0 294 062**
**EP-A- 0 319 056**
**EP-A- 0 327 983**

(73) Patentinhaber: **BAYER AG**

**D-51368 Leverkusen(DE)**

(72) Erfinder: **Wingler, Frank, Dr.**
**Walter-Flex-Strasse 17**
**D-5090 Leverkusen 1(DE)**
Erfinder: **Sümmermann, Klaus, Dr.**
**von-Steinen-Strasse 1**
**D-5758 Fröndenberg-Frömern(DE)**
Erfinder: **Bushong, William Craig, Dr.**
**Bodelschwinghstrasse 14**
**D-4150 Krefeld(DE)**

EP 0 361 230 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Mischungen von Polyamiden, aromatischen Polycarbonaten, die o,o,o',o'-Tetramethylbisphenol-Einheiten enthalten, und statistischen Copolymerisaten von Maleinimiden mit Styrol und/oder Methylmethacrylat und Acrylnitril, sowie gegebenenfalls Elastomeren und ihre Verwendung als thermoplastische Formmassen zur Herstellung von Formkörpern.

Polyamid-Formmasen werden zunehmend im Automobilbau, z.B. für Radkappen, eingesetzt. Deren Steifigkeit und Formbeständigkeit, insbesondere bei höheren Temperaturen, wie sie in Lackieröfen vorkommen, ist noch verbesserungsbedürftig. Bekannte Füllstoffe zur Erhöhung der Formbeständigkeit sind z.B. Glasfasern.

Um eine gute Verarbeitbarkeit der Massen durch Extrusion oder Spritzguß zu erzielen, könnte man statt Glasfasern gut schmelzende, jedoch wärmeformbeständige Polymere als Füllstoff verwenden. Das Problem ist jedoch die Zerteilung und Ankopplung des eingearbeiteten Verstärker-Polymers in Polyamiden.

Thermoplastische Blends aus amorphen Polyamiden und Polycarbonaten sind bekannt und u.a. in der EP 0 235 384 beschrieben. Ein Problem ist die mangelnde Ankopplung der Polyamid- und Polycarbonat-Phasen untereinander sowie die gleichmäßige Verteilung der Polycarbonat-Phase in der Polyamid-Matrix.

Es wurde nun gefunden, daß ein Zusatz von 1 bis 30 Gew.-%, bezogen auf die gesamte Polymermischung, eines statistischen Copolymerisates aus Maleinmiden mit Styrol und/oder Methylmethacrylat und Acrylnitril bestimmter Zusammensetzung ermöglicht, aromatische Polycarbonate, deren lineare Ketten zu mindestens 80 Mol-% aus wiederkehrenden Struktureinheiten der Formel (2):

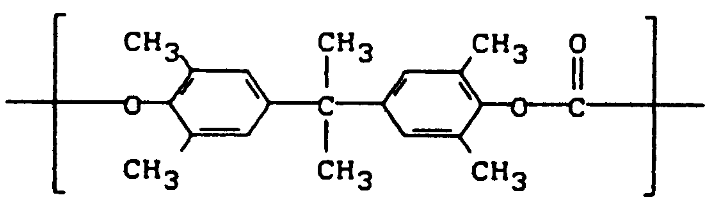
(2)

bestehen,
in thermoplastischen Polyamid-Formmassen einzuarbeiten, wobei Steifigkeit und Formbeständigkeit, insbesondere in der Wärme, verbessert werden.

Gegenstand der Erfindung sind demnach Mischungen aus

(A) Polyamiden, die in der Hauptkette mehrmals das Strukturelement (1) enthalte,

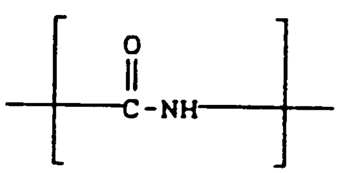
(1),

(B) aromatischen Polycarbonaten, deren lineare Hauptketten zu mindestens 80 Mol-% aus wiederkehrenden Struktureinheiten der Formel (2) bestehen,

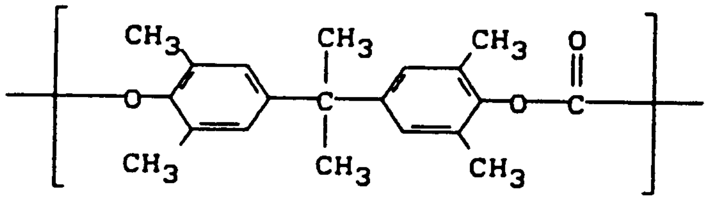
(2)
.

und

(C) statistischen Copolymerisaten aus

($C_1$) 5 bis 30 Gew.-% Maleinimideinheiten der Formel (3)

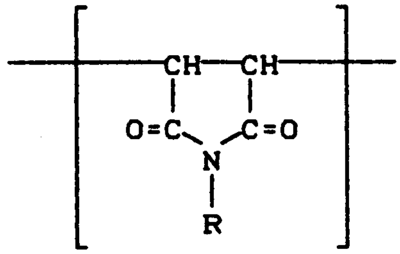

(3) ,

wobei

R = H, $C_1$-$C_{30}$-Alkyl, Cycloalkyl, Heterocycloalkyl, Aryl sind oder bedeuten,

($C_2$) 95 bis 38 Gew.-% Vinylaromat- und/oder Methylmethacrylat-Einheiten,

($C_3$) 0 bis 32 Gew.-% Acrylnitril-Einheiten.

Gegebenenfalls enthält die Mischung aus (A), (B) und (C) zur Erhöhung der Schlagfestigkeit noch ein Elastomer (D). Gegenstand der Erfindung ist auch die Verwendung der Mischung aus (A), (B), (C) und gegebenenfalls (D) als Formmasse zur Herstellung von Formkörpern.

Die Mischungen enthalten bevorzugt A und B im Gewichtsverhältnis 60 zu 40 bis 95 zu 5, besonders bevorzugt 70 zu 30 bis 80 zu 20. Der Bestandteil C macht 1 bis 30, bevorzugt 1 bis 25 Gew.-% der Mischung aus und die Menge D ist 0 bis 30 Gew.-%, bevorzugt 7,5 bis 25 Gew.-% der gesamten Polymerenmischung.

Polyamide im Sinne dieser Erfindung sind polymere Kondensationsprodukte, die aromatisch oder aliphatisch gebundene Amid-Gruppen als wiederkehrende Einheiten in der linearen Hauptkette enthalten. Sie enthalten in der Hauptkette Kohlenwaserstoffreste, die durch Gruppen der Formel:

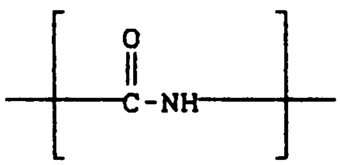

verbunden sind.

Dabei gibt es zwei Grundtypen, AB-Typ und AA/BB-Typ, wobei A eine primäre oder sekundäre Amino-Funktion und B eine Carboxyl-Funktion darstellen. Der AB-Typ wird durch Polykondensation von Aminocarbonsäuren bzw. deren funktionellen Derivaten oder durch Polymerisation von Lactamen hergestellt und heißt daher auch "Aminocarbonsäure-Typ", z.B. Nylon-6 (Poly-$\epsilon$-caprolactam).

Der AA/BB-Typ entsteht bei der Polykondensation von Diaminen mit Dicarbonsäuren, bzw. deren funktionellen Derivaten, wie Carbonsäurechloride und Carbonsäureester, z.B. Nylon-6:6 (Polylhexamethylenadipinamid).

Eine Übersicht über die hier verwendeten Polyamid findet sich in Houben-Weyl, Methoden der Organischen Chemie, 4. Auflage, Bd. E 20/2, S. 1497 ff., (1987), Georg Thieme Verlag, Stuttgart.

Die Molmassen der verwendeten Polyamide liegen im Bereich von 15 000 bis 50 000. Im folgenden werden die bedeutendsten Polyamide aufgeführt:

| Homopolymere | |
|---|---|
| Polyhexamethylen-adipinamid | (Nylon-6:6) |
| Polypyrrolidon | (Nylon-4) |
| Polycaprolactam | (Nylon-6) |
| Polyheptolactam | (Nylon-7) |
| Polycaprylactam | (Nylon-8) |
| Polynonanolactam | (Nylon-9) |
| Polyundecanolactam | (Nylon-11) |
| Polydodecanolactam | (Nylon-12) |
| Polyhexamethylen-azelainamid | (Nylon-6:9) |
| Polyhexamethylen-sebacinamid | (Nylon-6:10) |
| Polyhexamethylen-isophthalamid | (Nylon-6:ip) |
| Polymetaxylylen-adipinamid | (Nylon MSD:6) |
| Polyamid des Hexamethylendiamins und der n-Dodecandionsäure | (Nylon 6:12) |
| Polyamide des Dodecamethylendiamins und n-Dodecandionsäure | (Nylon 12:12) |

| Copolymere | |
|---|---|
| Hexamethylen-adipinamid/caprolactam | (Nylon 6:6/6) |
| Hexamethylen adipinamid/hexamethylenisophthalamid | (Nylon 6:6(6ip) |
| Hexamethylen-adipinamid/hexamethylenterephthalamid | (Nylon 6:6/6T) |
| Trimethylhexamethylen oxamid/hexamethylen-oxamid | (Nylon trimethyl-6:2/6:2) |
| Hexamethylen-adipinamid/hexamethylen-azelainamid | (Nylon 6:6/6:9) |
| Hexamethylen-adipinamid/hexamethylen-azelainamid/caprolactam | (Nylon 6:6/6:9/6). |

Polyamide sind amorph oder teilkristallin. Besonders erwähnt werden sollen teilkristallin Standard-Polyamide wie Nylon-6 (Poly-$\epsilon$-caprolactam), Nylon-11 (Polyundecanlactam), Nylon-6,6 Polylhexamethylen-adipinamid, Nylon-12 (Polylaurinlactam), ferner gemischt aliphatisch-aroma tische Polyamide, die Struktureinheiten der Terephthalsäure und Isophthalsäure, sowie m-Xylylendiamin, Bis-(4-aminophenyl)methan, Bis-(4-aminocyclohexyl)methan oder Bis-(4-aminophenyl)propan-2.2 enthalten. Anstelle eines Polyamides können in der Erfindung auch Gemische eingesetzt werden.

Die aromatischen Polycarbonate der Formel (2) enthalten 2,2-Bis-(3.5-dimethyl-hydroxyphenyl)-propan-Einheiten in polykondensierter Form. Daneben können andere aromatische Diole einkondensiert sein, z.B. Hydrochinon, Resorcin, Dihydroxydiphenyl, Bis-(hydroxyphenyl)-alkane, Bis-(hydroxy-phenyl)-cycloalkane, Bis-(hydroxyphenyl)-sulfide, Bis-(hydroxyphenyl)-ether, Bis-(hydroxyphenyl)-sulfone, $\alpha,\alpha'$-Bis-(hydroxyphenyl)-diisopropylbenzole sowie deren kernalkylierte und kernhalogfenierte Abkömmlinge.

Diese und weitere geeignete aromatische Dihydroxyverbindungen sowie darauf basierende Polycarbonate sind z.B. in den US-PS 3 028 365, 2 999 835, 3 148 172, 3 271 368, 2 991 273, 3 271 367, 3 780 078, 3 014 891, 2 999 846, in den DE-OS 2 063 050, 2 211 957, 1 570 703, 2 329 585, 2 329 646 und in Hermann Schnell, Chemistry and Physics of Polycarbonates, Polymer Reviews, Volume 9, Interscience Publishers, New York, 1964, beschrieben.

Bei der Herstellung der Polycarbonate werden vorzugsweise Rohbisphenole eingesetzt, wie sie aus 2,6-Dimethylphenol nach den Verfahren der DE-OS 2 928 464 und der DE-OS 2 928 443 hergestellt werden können. In diesem Fall können bis zu 15 Gew.-% Nebenprodukte im Reaktionsgemisch vorhanden sein. Dieses Reaktionsgemisch kann ohne vorherige Reinigung bei der Herstellung der Polycarbonate eingesetzt werden.

Bevorzugte Copolycarbonate mit wiederkehrenden Struktureinheiten der Formel (2) enthalten mindestens 80 Mol.-% dieser Struktureinheiten. Ganz besonders bevorzugt sind Polycarbonate, die ausschließlich wiederkehrende Struktureinheiten der Formel (2) enthalten.

Erfindungsgemäß einsetzbare aromatische Polycarbonate können nach bekannten Verfahren hergestellt werden, beispielsweise gemäß DE-OS 2 063 050, 2 211 957, 2 901 665 und 2 901 668. Diese Polycarbonate besitzen Molekulargewichte $\overline{M}_w$ (Gewichtsmittel) von 10 000-200 000, bevorzugt von 20 000-80 000, besonders bevorzugt von 25 000-60 000 und ganz besonders bevorzugt von 30 000-45 000.

Für die einstellung der gewünschten Molekulargewichte $\overline{M}_w$ können Kettenabbrecher in den üblichen Mengen verwenden werden. Geeignete Kettenabbrecher sind beispielsweise Phenole wie Phenol, o-, m-, p-Kresol, 2,6-Dimethylphenol, p-tertiär-Butylphenol und p-Isooctylphenol.

Die erfindungsgemäß einsetzbaren Polycarbonate können verzweigt sein. Dies wird durch den Einbau geringer Mengen, vorzugsweise von Mengen von 0,05 bis 2,0 Mol-% (bezogen auf eingesetzte Diphenole), an drei- oder mehr als dreifunktionellen verbindungen erreicht. Als dreifunktionelle Verbindungen werden vorzugsweise solche mit drei oder mehr als drei phenolischen Hydroxygruppen eingesetzt. Die Herstellung von verzweigten Polycarbonaten dieser Art ist z.B. in den DE-OS 1 570 533, 1 596 762, 2 116 974, 2 113 347, GB-PS 1 079 821 und 1 476 108 sowie US-PS 3 544 514 beschrieben. Statistische Copolymerisate (C) mit Struktureinheiten (3) sind bekannt und z.B. in der DE-PS 3 430 802 beschrieben. Sie sind auf zwei Wegen herstellbar:

1. Statistische Copolymerisation von Maleinsäureanhybrid mit Vinylaromaten und gegebenenfalls weiteren copolymerisierbaren vinylverbindungen, insbesondere Acrylnitril und Derivaten der (Meth)acrylsäure und anschließende polymeranaloge Umsetzung mit Aminen in Lösung, Feststoff oder in der Polymerschmelze, Vinylaromaten sind z.B. Styrol, α-Methylstyrol, p-tert.-Butylstyrol, Chlorstyrole.

Verfahren zur statistischen Copolymerisation von Maleinsäureanhybrid werden beispielsweise in DE-AS 2 724 360, DE-OS 2 343 871, DE-OS 2 747 822 beschrieben. Verfahren zur Umsetzung der Maleinsäureanhydride mit primären Aminen zu Maleinimid-Copolymerisaten sind beschrieben in DE-AS 1 925 996, US-PS 4 404 322, DE-OS 2 343 408, DE-OS 3 148 965 und DE-PS 3 430 802. Bevorzugt werden die Polymeren (C) mit den wiederkehrenden Struktureinheiten (3) nach dem Verfahren der DE-PS 3 430 802 hergestellt. Die zu imidisierenden Ausgangsharze enthalten 2 bis 35 Mol-% Maleinsäureanhyrid und besitzen Molmassen von 10 000 bis 150 000. Als Amine werden primäre aliphatische, cycloaliphatische, heterocyclische, aromatische Amine mit 1 bis 30 Kohlenstoffatomen eingesetzt.

Geeignete Amine sind z.B. Monomethylamin, Monoethylamin, n-Propylamin, Monoisopropylamin, Monobutylamin, Isobutylamin, sekundäres Butylamin, tertiäres Butylamin, Monopentylamin, Isobutylamin, 1,2-Dimethylpropylamin, 1,1-Dimethylpropylamin, tert.-Pentylamin, Monohexylamin, 5-Methyl-2-hexylamin, Monooctylamin, Mono-2-ethyl-hexylamin, 6-Methyl-2-heptamin, Dodecylamin, Tetradecylamin, Hexadecylamin, Tridecylamin, 2-Methoxyethylamin, 2-Ethoxyethylamin, 3-Methoxypropylamin, 3-Methoxypropylamin, 3-Ethoxypropylamin, 3-(2-Ethoxy)propylamin, 2-(Ethylhexyl)-(3-aminopropylether), 3-Tridecyloxypropylamin, 3-Stearyloxypropylamin, 1-Methoxymethylpropylamin, 2-Aminopropionaldehyd-dimkethylacetal, 5-Diethylamino-2-pentanon, 9-Phenoxy-4,7-dioxanonan-1-amin, Cyclopropylmethylenamin, Cyclohexylamin, 2-Methylcyclohexylamin, 3,3,5-Trimethylcyclohexylamin, Norbornylamin, Benzylamin, 2-Phenylethylamin, o-Methoxyphenylethylamin, p-Methoxyphenylethylamin, 3,4-Dimethoxybenzolethylamin (Homoveratrylamin), 2-Phenylpropylamin, 1-Methyl-3-phenylpropylamin, Anilin, o-Toluidin, 3,3,5-Trimethylcyclohexylamin, o, m, p-Chloranilin, Di- und Trichloraniline, o, m, p-Methylanilin und Dimethylaniline, bzw. gemischte Methyl-chlor-aniline, Methoxy- und Ethoxyaniline, Methoxy- und Ethoxy-methylaniline, Dimethoxy- und Diethoxyaniline, Amino-benzonitrile, Amino-benzoesäureamide, Aminobenzoesäureester, 2-Dimethylaminoethylamin, 2-Diethylaminoethylamin, 2-Diisopropylaminoethylamin,2-Dibutylaminoethylamin, Dimethylaminopropylamin, Diethylaminopropylamin, 4-Diethylaminobutylamin, Diethylamino-4-aminopentan, Dimethylaminoneopentanamin, 2-(1-Pyrrolidyl)ethylamin, 2-(Piperidyl)ethylamin, 1-(2-Aminopropyl)piperidin, 2-(4-Morpholin)ethylamin, 4-(3-Aminopropyl)-morpholin, 1-(3-Aminopropyl)imidazol, Aminosulfolan, 2-Furanmethylamin, 3-Dibenzofuranamin, 7-Amino-3-phenylcumarin, 2-Pyridinamin, 2-Pyrimidinamin, 1H Benzimidazol-2-pentylamin, Triazolamin, 4-Morpholinpropanamin, 2-Aminothiazol, 1-(2-Aminoethyl)piperazin, 1-Cyclohexylethylamin, 1-Phenylethylamin, N-Acyl-4.4′-diamino-diphenylmethan, N-Acyl-4,4′-diamino-diphenyl-dimethylmethan.

Die Umsetzung mit den Monoaminen oder den Mischungen hieraus verläuft über ein Halbimidstufe. Unter Wasserabspaltung entsteht hieraus die Imid-Stufe. Es brauchen nicht alle Anhydrid-Gruppen in Imid-Gruppen überführt zu sein. Es reicht, wenn die Umsetzung zu mindestens 70% erfolgt. Das Polymer (C) trägt dann noch freie Anhydrid- und Halbamid-Gruppen.

2. Bei dem zweiten Weg, der zu den Maleinimid-Polymeristaten (C) führt, wird Maleinsäureanhydrid zuerst mit einem der obigen primären Monoamine über die Halbimidstufe umgesetzt und die Imidstufe durch Wasserabspaltung, z.B. in Acetanhydrid, erreicht und das so erhaltene Maleinimid mit Vinylaromat und/oder Methylmethacrylat und gegebenenfalls Acrylnitril copolymerisisert. Die Polymerisationsverfahren sind dieselben wie die oben beschriebenen zur Herstellung von statistischen Maleinsäureanhydrid-Copolymeren, nur daß anstelle von Maleinsäureanhydrid das Maleinimid eines der oben beschriebenen Amine eingesetzt wird. Es können auch Gemische von Maleinimid-Derivaten eingesetzt werden.

Polyamide mit der wiederkehrenden Struktureinheit (1) und Polycarbonate mit der wiederkehrenden Struktureinheit (2) lassen sich nicht homogen durch Schmelzcompoundieren mischen. Stellt man in der Schmelze eine Mischung her, die überwiegend Polyamid enthält, so zerteilt sich in der (kontinuierlichen) Polyamidphase das Polycarbonat fladenförmig. Das Polyamid ist dann zwar mit Polycarbonat "gefüllt",

doch besteht zwischen den beiden Phasen kein Verbund. Die Mischung hat deshalb schlechte mechanische Eigenschaften. Bei überwiegendem Polycarbonat kehrt sich das Phasenverhalten um. Auch in diesem Fall ist die Verteilung des Polyamids im (kontinuierlichen) Polycarbonat unregelmäßig und es fehlt der Verbund zwischen den Phasen. Der Zusatz von 1-30 Gew.-% eines statistischen Maleinimid-Copolymerisates (C) zu einer Mischung aus Polyamid(A) und Polycarbonat (B) verändert die Phasenstruktur in der Mischung erhelblich und bewirkt eine Phasenankopplung. Durch den erfindungsgemäßen Zusatz (C) wird die im Unterschuß vorhandene Polymer-Phase innerhalb der im Überschuß vorhandenen Polymer-Phase feinteilig und homogen dispergiert. Die mechanische Festigkeit steigt stark an, was auf eine Ankopplung und Kraftübertragung zwischen den Phasen schließen läßt. Gegebenenfalls können zur Verbesserung der Zähigkeit Elastomere (D) zugegeben werden. Diese können auch zur besseren Phasenankopplung mit Vinylmonomeren bepfropft sein. Beispielsweise sind hier zu nennen:
Polybutadienkautschuk, Acrylatkautschuk, Styrol-Butadien-Kautschuk, Polybuten-Kautschuk, hydrierte Styrol-Butadien-Kautschuke, Acrylnitril-Butadien-Kautschuk, Ethylen-Propylen-Kautschuk, Polyisopren-Kautschuk, styrolgepfropfte Ethylen-Propylen-Kautschuke, thermoplastische Ethylen-Propylen-Kautschuke, thermoplastische Polyester-, oder Polyurethan-Elastomere, Ethylenkautschuk und Ionomere, Styrol-Butadien-Blockcopolymere, wie z.B. AB, ABA, ABA-Tapering-und Stern-Blockcopolymere sowie ähnliche Isopren-Blockpolymerisate und hydrierte oder teilweise hydrierte Blockcopolymerisate.

Der Anteil des schlagzäh modifizierenden Kautschuks ist nicht kritisch. Im allgemeinen beträgt er jedoch nicht mehr als 30 Gew.-%, bezogen auf die Gesamtmenge der Komponenten A) bis C).

Sind die Kautschuke mit Vinylmonomeren, wie z.B. Styrol, $\alpha$-Methylstyrol, p-Methylstyrol, Methylmethacrylat, Acrylnitril, Maleinsäureanhdyrid, Maleinimid-Derivaten, unter vielen bepfropft, so spricht man von Pfropfpolymeren oder auch Polymermodifikatoren (siehe hierzu Dr. H. Waniczek in Houben-Weyl, Methoden der Organischen Chemie, 4. Auflage, Bd. E 20, Teil 1, S. 626 ff, Georg Thieme Verlag, Stuttgart 1987 und ebenda: H. Alberts u. Chr. Lindner, S. 663 ff). Kautschuk-Grundlage für die Pfropfpolymeren oder Polymermodifikatoren sind z.B. Dienkautschuk, Ethylen-Propylen-Dien-Kautschuk oder Acrylatkautschuk, die nach bekannten Verfahren erhalten werden können.

Unter Dienkautschuken werden Homopolymerisate von konjugierten Dienen mit 4-8 C-Atomen, z.B. Butadien, Isopren und Chloropren, copolymerisate solcher Diene untereinander und copolymerisate solcher Diene mit anderen Monomeren, insbesondere mit bis zu 50 gew.-% der obengenannten, verstanden. Solche Dienkautschuke sind beispielsweise Polybutadien, Polyisopren, Butadien-Styrol-Copolymere, Butadien-Acrylnitril-Copolymere, Butadien-Methylmethacrylat-Copolymere und Butadien-Acrylsäurebutylester-Copolymer. Ethylen-Propylen-Dien-Kautschuke sind beispielsweise solche, die als Dien Hexadien-1,5, Norbornadien oder Ethylidennorbornen enthalten. Acrylatkautschuke sind beispielsweise vernetzte oder unvernetzte Polymerisate aus Acrylsäurealkylestern, gegebenenfalls mit bis zu 40 Gew.-% anderer polymerisierbarer ethylenisch ungesättigter Monomerer. Zu den Acrylsäurealkylestern gehören bevorzugt $C_1$-$C_8$-Alkylester, z.B. Methyl-, Ethyl-, Butyl-, Octylester, insbesondere der Butylester. Acrylatkautschuke sind beispielsweise in der Deutschen Patentanmeldung P 3 118 861 beschrieben.

Spezielle, geeignete Pfropfpolymerisate auf Kautschuk-Grundlage sind z.B. in den Europäischen Patentanmeldungen EP 0 096 301 und 0 064 692 beschrieben.

Die Herstellung der Polymermischung oder Polymer-compounds erfolgt durch Mischen in Polymerschmelze auf Knetern, Walzen oder Schneckenmaschinen wie Extruder.

Die erfindungsgemäßen Formmassen können übliche Additive, wie Gleit- und Entformungsmittel, Nukleiermittel, Stabilisatoren, Füll- und Verstärkungsstoffe, Flammschutzmittel sowie Farbstoffe enthalten.

Die erfindungsgemäßen thermoplastischen Formmassen können Füll- und/oder Verstärkungsstoffe enthalten. Bevorzugte Füllstoffe, die auch verstärkend wirken können, sind Glasfasern, Glaskugeln, Glimmer, Silikate, Quarz, Talkum, Titandioxid, Wollastonit, Aramid-Fasern.

Die mit Flammschutzmitteln ausgerüsteten Formmassen enthalten Flammschutzmittel in einer Konzentration von im allgemeinen weniger als 30 Gew.-%, bezogen auf die flammgeschützen Formmassen.

Es kommen alle bekannten Flammschutzmittel in Frage, wie z.B. Polyhalogendiphenyl, Polyhalogendiphenylether, Polyhalogenphthalsäure und ihre Derivate und Polyhalogenoligo- und -polycarbonate, wobei die entsprechenden Bromverbindungen besonders wirksam sind. Außerdem enthalten sie in der Regel einen Synergisten, z.B. Antimontrioxid.

Beispiele

Bestandteile der Polymerenmischung

Polyamid A:

Polyamid 6 mit einer relativen viskosität von 3,5 dl/g, gemessen in $H_2SO_4$ konz.

Polycarbonat B:

Tetramethyl-bisphenol-A-Polycarbonat (MPC) der relativen Lösungsviskosität 1,30 dl/g (gemessen bei 25 °C in $CH_2Cl_2$ bei 0,5 g in 100 ml Lösung).

Maleinimidcopolymerisat C:

Statistische Copolymerisate aus Styrol und Maleinsäureanhyhdrid wurden nach DE-AS 2 724 360 bzw. DE-OS 2 343 871 hergestellt und enthalten 22 Gew.-% Maleinsäureanhydrid ($a_1$) und 13 Gew.-% Maleinsäureanhydrid ($a_2$). Die Intrinsicviskosität beträgt für $a_1$ 0,51 dl/g, gemessen bei 25 °C in DMF, für $a_2$ 0.54 dl/g.

Die Harze $a_1$ und $a_2$ wurden mit Anilin zum Maleinimidcopolymerisat in einer Zweiwellen-Schneckenmaschine entsprechend der DE-PS 3 430 802 umgesetzt. Die Wellen haben einen Durchmesser von 32 mm und eine Länge von 1200 mm. Die Reaktionsbedindungen sind Tabelle 1 zu entnehmen. Die flüchtigen Anteile wurden in einer Entgasungszone unter Anlegen von Vakuum entfernt. Das N-Phenylmaleinimid-Harz C 1 besteht aus 72 Gew.-% Styrol, 27,7 Gew.-% N-Phenylmaleinimid und 0,3 Gew.-% Maleinsäureanhydrid in polymerisierter Form; das Harz C2 aus 80,7 Gew.-% Styrol, 18 Gew.-% N-Phenylmaleinimid und 1,3 gew.-% Maleinsäureanhydrid.

Elastomerkomponente D

Pfropfpolymerisat, hergestellt durch Pfropfung von 10 Gew.-Teilen Methylmethacrylat und 10 Gew.-Teilen n-Butylacrylat auf 80 Gew.-Teile einer Polybutadienkautschukgrundlage einer mittleren Teilchengröße ($d_{50}$-Wert) von 400 nm und einem Gelgehalt von 90 Gew.-%.

Tabelle 1

| Harz | Ausgangs-harz | Menge g/h | Amin | Menge g/h | Katalysator | Menge g/h | Temperatur °C | Umsatz % |
|---|---|---|---|---|---|---|---|---|
| C 1 | $a_1$ | 3000 | Anilin | 628 | Triethylendiamin | 7,6 | 235 | 97 |
| C 2 | $a_2$ | 3000 | Anilin | 533 | Triethylendiamin | 8,5 | 240 | 90 |

Die Polymermischungen wurden auf einem gegensinnig drehenden, konischen Laborextruder bei 300 °C hergestellt, granuliert und bei 240 °C zu Normkleinstäben gespritzt. Für Einzelheiten siehe Tabelle 2.

Die Bestimmung der Schlagzähigkeit erfolgte nach ISO 180 Methode 1c an 80 mm x 10 mm x 4 mm Flachstäben.

Die Bestimmung der Kerbschlagzähigkeit erfolgte nach ISO 180, Methode 1 A.

Tabelle 2

| Versuch | A | B | C | D | $a_k$ 1) | $a_n$ 2) |
|---|---|---|---|---|---|---|
| | Gew.-% | Gew.-% | Gew.-% | Gew.-% | $kJ/m^2$ | $kJ/m^2$ |
| 1 | 45,92 | 37,24 | - | 16,84 | 11,3 | 9,0 |
| 2 | 45 | 36,5 | 2 (C2) | 16,5 | 15,9 | n.g. 3) |
| 3 | 44 | 35,5 | 4 (C2) | 16,5 | 16,8 | n.g. |

1) Kerbschlagzähigkeit
2) Schlagztähigkeit
3) Nicht gebrochen

Zur Untersuchung der Morphologie der Polymermischung wurden von Ultra-Dünnschnitten nach Ätzung mit Formalin und Osmiumtetroxid elektronenmikroskopische TEM Aufnahmen gemacht.

Die Aufnahme der Mischung aus Versuch 1 zeigt eine grobdisperse Verteilung der amorphen MPC-Phase im teilkristallinen Polyamid. Die grob dispergierten MPC-Teilchen besitzen einen Durchmesser von 2 bis 4 µm. Dagegen zeigen die TEM-Aufnahmen der Materialien aus Versuch 2 und 3, daß die MPC-Teilchen feindispers mit Teilchendurchmessern bis unter 0,1 µm vorliegen.

**Patentansprüche**

**1.** Mischungen aus

(A) Polyamiden, die das Strukturelement der Formel (1) mit

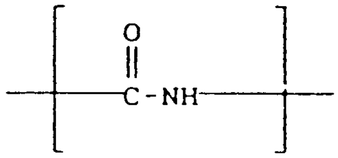

(1),

mehrmals in der Hauptkette enthalten, amorph oder teilkristallin sind und Molmassen von 15 000 bis 50 000 aufweisen

(B) aromatischen Polycarbonaten, deren lineare Hauptketten zu mindestens 80 Mol-% aus wiederkehrenden Struktureinheiten der Formel (2) bestehen,

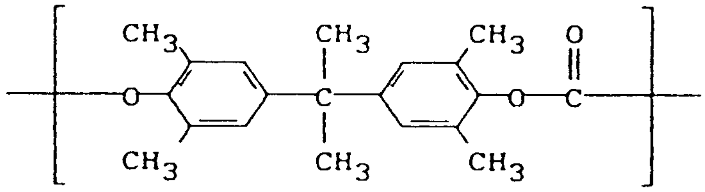

(2),

mit Molekulargewichten $\overline{M}_w$ von 10 000 - 200 000

und

(C) statistischen Copolymerisaten aus

($C_1$) 5 bis 30 Gew.-% Maleinimideinheiten der Formel (3)

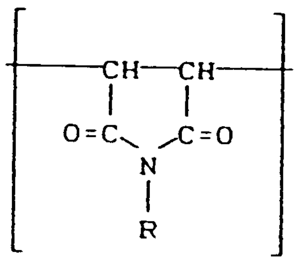

(3) ,

wobei

R = H, $C_1$-$C_{30}$-Alkyl, Cycloalkyl, Heterocycloalkyl, Aryl sind oder bedeuten,

($C_2$) 95 bis 38 Gew.-% Vinylaromat- und/oder Methylmethacrylat-Einheiten,

($C_3$) 0 bis 32 Gew.-% Acrylnitril-Einheiten, sowie gegebenenfalls

D) einem Elastomer, wobei

A und B im Gewichtsverhältnis 60 zu 40 bis 95 zu 5, C in Mengen von 1 bis 30 Gew.-%, bezogen auf die Mischung aus A und B und D in Mengen von 0 - 30 Gew % bezogen auf die gesamte Mischung vorliegen.

## Claims

**1.** Mixtures of

(A) Polyamides containing the structural element corresponding to Formula (1)

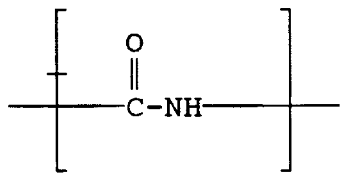

(1)

several times in the main chain, are amorphous or partially crystalline and have molar masses of from 15,000 to 50,000,

(B) aromatic polycarbonates in which the linear main chains consist to an extent that at least 80 mol-% of recurrent structural units corresponding to formula (2)

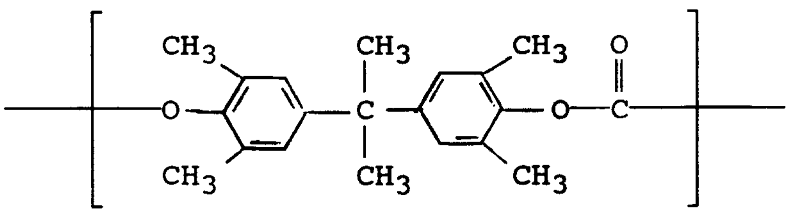

(2),

and which have molecular weights Mw of from 10,000 to 200,000 and

(C) random copolymers of

($C_1$) from 5 to 30% by weight of maleiimide units corresponding to formula (3)

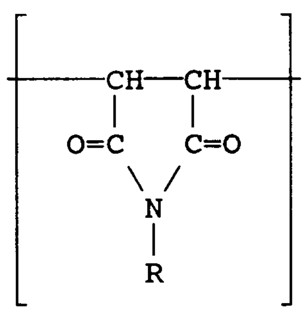

(3),

wherein

R stands for H, $C_1$-$C_{30}$-alkyl, cycloalkyl, heterocycloalkyl or aryl,

($C_2$) from 95 to 38% by weight of vinyl aromatic and/or methyl methacrylate units and

($C_3$) from 0 to 32% by weight of acrylonitrile units and optionally

(D) an elastomer, wherein

A and B are present in a ratio by weight of from 60 : 40 to 95 : 5, C is present in quantities of from 1 to 30% by weight, based on the mixtures of A and B, and D is present in quantities of from 0 - 30% by weight, based on the whole mixture.

**Revendications**

**1.** Mélanges de

(A) des polyamides contenant à plusieurs reprises dans la chaîne principale l'élément de structure de formule (1):

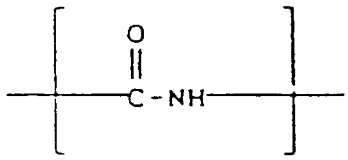

(1),

qui sont amorphes ou partiellement cristallisés et ont des masses moléculaires de 15 000 à 50 000,

(B) des polycarbonates aromatiques dont les chaînes principales linéaires consistent pour au moins 80 mol % en motifs de structure répétés de formule (2):

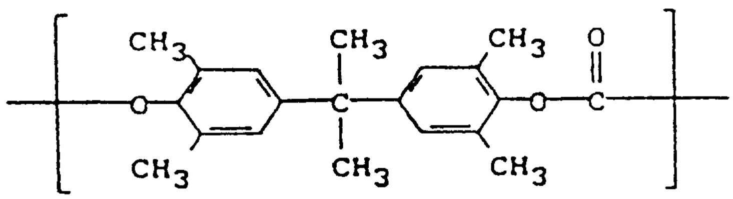

(2)

à des poids moléculaires $\overline{M}_w$ de 10 000 à 200 000, et

(C) des copolymères statistiques de

($C_1$) 5 à 30 % en poids de motifs de maléimides de formule (3):

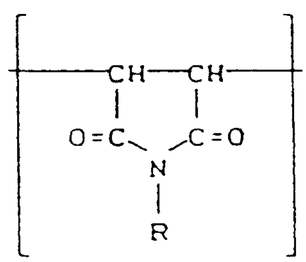

(3) ,

dans laquelle

R = H, alkyle en $C_1$-$C_{30}$, cycloalkyle, hétérocycloalkyle, aryle,

($C_2$) 95 à 38 % en poids de motifs de composés vinylaromatiques et/ou de méthacrylate de méthyle,

($C_3$) 0 à 32 % en poids de motifs d'acrylonitrile, et le cas échéant

(D) un élastomère,

A et B étant présents à des proportions relatives en poids de 60:40 à 95:5, C en quantité de 1 à 30 % en poids par rapport au mélange de A et B, et D en quantité de 0 à 30 % en poids par rapport au mélange total.